Europäisches Patentamt

European Patent Office

Office européen des brevets

(19)

(11) Veröffentlichungsnummer: **0 306 768**

**A2**

(12) **EUROPÄISCHE PATENTANMELDUNG**

(21) Anmeldenummer: **88113714.5**

(22) Anmeldetag: **23.08.88**

(51) Int. Cl.⁴: **G01S 15/93 , G01K 11/00**

(30) Priorität: **08.09.87 DE 3730105**

(43) Veröffentlichungstag der Anmeldung:
**15.03.89 Patentblatt 89/11**

(84) Benannte Vertragsstaaten:
**DE FR GB IT SE**

(71) Anmelder: **IBP Pietzsch GmbH**
**Hertzstrasse 32-34**
**D-7505 Ettlingen(DE)**

(72) Erfinder: **Göbel, Ewald**
**Wingertgasse 20**
**D-7500 Karlsruhe(DE)**
Erfinder: **Maurer, Dieter**
**Am Berg 46**
**D-7500 Karlsruhe 41(DE)**
Erfinder: **Opitz, Rigobert**
**Karlsruher Strasse 9**
**D-7517 Waldbronn(DE)**

(74) Vertreter: **Liesegang, Roland, Dr.-Ing. et al**
**FORRESTER & BOEHMERT**
**Widenmayerstrasse 4**
**D-8000 München 22(DE)**

(54) **Verfahren und Einrichtung zum Sichern eines im Raum beweglichen Fahrzeugs oder Geräts.**

(57) Ein Verfahren und eine Einrichtung zum Sichern eines im Raum beweglichen Fahrzeugs oder Geräts, wie eines Roboters, Staplers, fahrerlosen Transportfahrzeuges oder dgl., gegen Kollision, wobei unter Einsatz von Abstandssensoren, insbesondere Ultraschallsensoren mit Laufzeitmessung, die Entfernung von einem Hindernis gemessen und bei Unterschreiten von vorgegebenen Schwellenwerten ein Reaktionssignal ausgelöst wird, zeichnen sich durch eine zeitsynchrone Betätigung der Abstandssensoren in einer Verbundschaltung aus, die im Falle einer gefährlichen Annäherung des Fahrzeugs an ein Hindernis ein Reaktionssignal in Form eines Geschwindigkeitsreduktionssignals oder eines Stopsignales auslöst. Das Meßsignal kann außerdem zu einem Führungssignal zur aktiven Beeinflussung der Fahrzeugbewegung, z.B. zum Umfahren des Hindernisses oder dgl. verwendet werden.

EP 0 306 768 A2

## Verfahren und Einrichtung zum Sichern eines im Raum beweglichen Fahrzeugs oder Geräts

Die Erfindung betrifft ein Verfahren und eine Einrichtung mit dem Merkmalen des Oberbegriffs des Anspruchs 1 (US-A-3,493,920).

Bei einem bekannten Verfahren zur Abstandsmessung nach dem Ultraschall-Echoprinzip wird das reflektierte Echosignal während einstellbarer Torzeiten einer Auswerte-Elektronik zugeführt. Im Bereich dieser Torzeiten sind keine Entfernungen erkennbar (DE-A-3 036 081).

Es ist bekannt, an im Raum gesteuert, ferngesteuert oder autonom beweglichen Fahrzeugen Abstandssensoren, insbesondere Ultraschallsensoren, anzubringen, die eine Kollision mit einem Hindernis vermeiden helfen sollen. Solche bekannten Sensoren werden seriell getaktet, um Meßfehler zu vermeiden. Dies bedingt jeweils das Abschließen des Meßzyklus eines Sensors vor dem Start des Meßzyklus eines anderen Sensors (EP-A-0 052 357).

Der Erfindung liegt die Aufgabe zugrunde, ein Verfahren und eine Einrichtung der im Oberbegriff des Anspruchs 1 angegebenen Art zu schaffen, mit denen ein höheres Maß an Sicherheit gegen eine Kollision mit Hindernissen erzielbar ist.

Zur Lösung dieser Aufgabe sind bei einem Verfahren nach der Erfindung die Merkmale des Anspruchs 1 und bei einer Einrichtung nach der Erfindung die Merkmale des Anspruchs 3 vorgesehen.

Die Sensoren sind vorteilhaft als Ultraschallsensoren zum Aussenden und Empfangen von Ultraschallsignalen ausgestaltet und alle gleich ausgebildet. Es sind also nicht unterschiedliche Sensoren für alle kurze oder lange Distanzen und/oder zum Auslösen eines Warnsignals oder eines Notstops verwendet wie bei der US-A-3,493,920.

Gemäß der Erfindung sind alle an dem Fahrzeug befindlichen Abstandssensoren in einem Verbundsystem zur gemeinsamen, zeitlich synchronen Auslösung und Meßwertverarbeitung zusammengefaßt. Dies schließt die Möglichkeit einer Kollision mit einem Hindernis aus, das im Erfassungsbereich eines gemäß dem Stand der Technik gerade nicht aktivierten Sensors liegt.

Durch die synchrone Taktung aller Sensoren läßt sich eine hohe Abtastrate erzielen, die höhere Fahrzeuggeschwindigkeiten als bisher zuläßt.

Das Reaktionssignal kann eine Geschwindigkeitsreduzierung oder einen Stop des Fahrzeugs bewirken, wobei vorteilhaft die Geschwindigkeit bei Unterschreiten einer ersten, größeren Entfernung von einem Hindernis reduziert und ein Notstop bei Unterschreiten einer zweiten, kleineren vorgegebenen Entfernung ausgelöst wird. Beide Entfernungsschwellenwerte sind unabhängig voneinander einstellbar.

Zusätzlich können die Meßsignale der Sensoren als Führungssignale zur aktiven Beeinflussung der Fahrzeugbewegung im Sinne einer Hindernisumfahrung, Fahrt parallel zu einer Wand oder dgl. ausgenützt werden.

Eine konstruktive Ausgestaltung einer Einrichtung gemäß dem Oberbegriff des Anspruchs 3 zeichnet sich dadurch aus, daß der oder jeder Ultraschallsensor in einer am Fahrzeug angebrachten Aufnahmevorrichtung nach allen Richtungen in vorgebbaren Winkelbereichen justierbar untergebracht ist. Damit ist eine raumdeckende Überwachung der Umgebung auf Hindernisse ermöglicht.

Diese Ausgestaltung der Erfindung ermöglicht die austauschbare, kapazitiv entkoppelte und individuell im Winkel justierbare Anordnung eines oder mehrerer Abstandssensoren am Fahrzeug.

Die Erfindung ist im folgenden anhand schematischer Zeichnungen an Ausführungsbeispielen mit weiteren Einzelheiten näher erläutert. Es zeigen:

Fig. 1 ein im Raum bewegliches Fahrzeug in Draufsicht, an dem mehrere Ultraschallsensoren angeordnet sind;

Fig. 2 ein Schaltschema für die Zusammenschaltung der Sensoren nach Fig. 1 zur gemeinsamen Initiierung und Verarbeitung von deren Meßsignalen;

Fig. 3 eine konstruktive Ausführung einer Einrichtung zur gemeinsamen Aufnahme mehrerer Ultraschallsensoren.

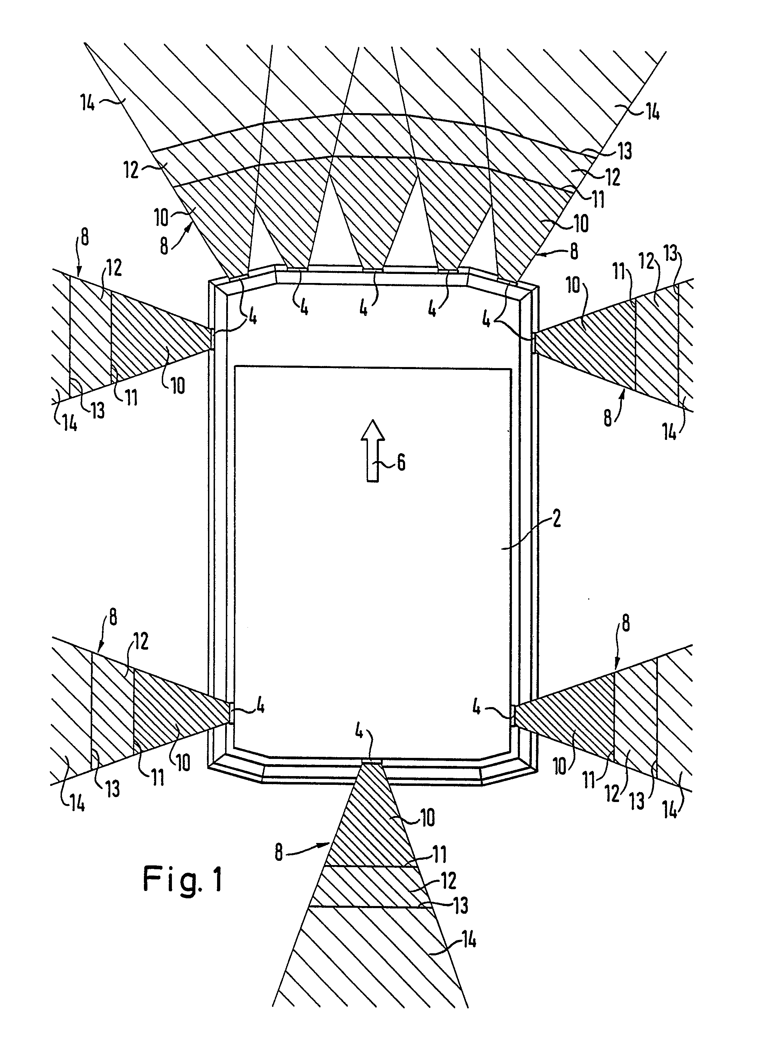

Das in Fig. 1 dargestellte Fahrzeug 2 ist beispielsweise ein fahrerloses Transportfahrzeug, wie es in modernen Fabriken eingesetzt wird. An seiner Frontseite ist das Fahrzeug 2 mit insgesamt fünf Ultraschallsensoren 4 versehen. An den beiden Seiten des Fahrzeuges 2 sind je zwei Ultraschallsensoren 4 angeordnet, während an der Rückseite nur ein Ultraschallsensor 4 vorgesehen ist.

Sämtliche Ultraschallsensoren sind zum Senden und Empfangen von Ultraschallsignalen ohne Unterscheidung kurzer oder langer Distanz gleich ausgebildet.

Die Hauptfahrtrichtung des Fahrzeuges 2 ist durch den Pfeil 6 angedeutet. In dieser Vorwärtsfahrtrichtung ist die Anordnung der Ultraschallsensoren so dicht, daß sich die Erfassungskegel oder "Keulen" der Ultraschallsensoren 4 schon in unmittelbarer Nähe vor dem Fahrzeug überlappen, so daß schon relativ nah vor dem Fahrzeug ein lückenloses Überwachungsfeld gebildet wird. In jeder Keule 8 ist ein engschraffierter Bereich 10, ein weniger eng schraffierter Bereich 12 und ein weit schraffierter Bereich 14 angeordnet. Die Begrenzungslinie 11 des eng schraffierten Bereiches bezeichnet eine Schwelle, die ein Stopsignal für das Fahrzeug 2 auslöst. Die Begrenzungslinie 13 des weniger eng schraffierten Bereiches 12 bezeichnet eine Schwelle, an der ein Geschwindigkeitsreduktionssignal für das Fahrzeug 2 ausgelöst wird.

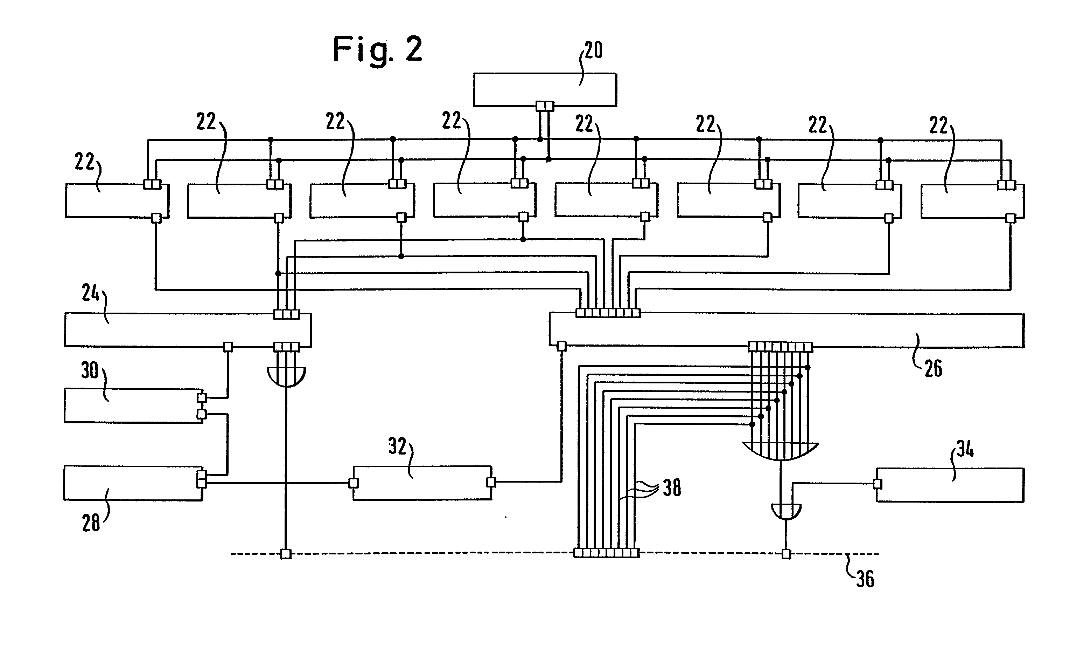

Die Ultraschallsensoren 4 werden gemeinsam getaktet ausgelöst (Meßzyklus), und ihre Meßsignale werden in einer gemeinsamen Schaltung verarbeitet, die schematisch in Fig. 2 dargestellt ist.

In Fig. 2 sind mit der Bezugszahl 20 ein Zeitmodul zur zeitlich synchronen Initiierung der Meßzyklen sämtlicher Abstandssensoren und der entsprechenden Zählvorgänge zur Abstandsmessung (Laufzeitmessung) bezeichnet.

Die Bezugszahl 22 bezeichnet Sensormodule, in denen ein oder mehrere Ultraschallsensoren zusammengefaßt sind.

Mit 24 ist ein Komparatormodul zur Verwirklichung einer Geschwindigkeitsreduktion und mit 26 ein Komparatormodul zur Verwirklichung eines Notstops des Fahrzeuges 2 bezeichnet. Die Komparatormodule 24, 26 sind mit entsprechenden Schwellenwerten programmierbar, die in den Komparatormodulen ständig anstehen und verändert werden können, beispielsweise mit Reichweitenvorgaben in Bereichen zwischen 0,3 und 10 m.

Bezugszahl 28 bezeichnet einen Kodierschalter zur manuellen Eingabe von Schwellenwerten einerseits über einen Schwellwertbaustein 30 in den Komparatormodul 24 zur Geschwindigkeitsreduktion, und andererseits über einen Schwellenwertmodul 32 in den Komparatormodul 26 zum Auslösen eines Halts. Zum Auslösen eines Notstops ist zusätzlich ein unabhängiger Notstopschalter 34 vorgesehen. Die Komparatormodule 24 und 26 sowie der Notschalter 34 wirken auf eine externe Schnittstelle 36, die durch eine gepunktete Linie angedeutet ist. Ausgehend vom Komparatormodul 26 sind Leitungen 38 zur Schnittstelle 36 geführt, die eine Sensoridentifikation, d.h. eine Feststellung ermöglichen, welcher Ultraschallsensor die Auslösung bewirkte.

Die beschriebene Schaltung arbeitet wie folgt:

Durch das Einschalten werden in dem Zeitmodul 20 sowohl der Meßzyklus (Wiederholung des Meßvorganges) als auch der Auflösungszyklus (Zählvorgang zur Abstandsmessung) zeitlich synchron ausgelöst, so daß alle Sensormodule 22 gleichzeitig initiiert werden. Die Meß- und Auflösungsrate ist dabei veränderbar (minimal 120 ms).

Die somit initiierten Sensormodule 22 versorgen die eigentlichen Ultraschallsensoren 40 (in Fig. 2 nicht gezeigt) und messen die zurückkommenden Echosignale. Die Entfernungsinformation wird in Zählimpulsen einer Laufzeitmessung dargestellt.

Das erste Echosignal, das den vorgegebenen Schwellenwert des Abstandes von einem Hindernis unterschreitet, löst im Komparatormodul 24 eine Geschwindigkeitsreduktion oder im Komparatormodul 26 einen Notstop aus. Die Geschwindigkeitsreduktion bewirkt ein Abbremsen der ursprünglich hohen Fahrzeuggeschwindigkeit und ein sanftes Anfahren an Hindernisse.

Die Echosignale können zusätzlich als Führungssignale für die Steuerung des Antriebes bzw. der Lenkung des Fahrzeuge 2 dienen.

Jeder Ultraschallsensor ist dabei durch seine Entfernungsvorgabe für die Gechwindigkeitsreduktion als auch für den Notstop einzeln oder global hinsichtlich seines Sicherheits- bzw. Wirkbereiches "programmiert". So können beliebige Sicherheitskonturen erzeugt werden.

Anstatt über den manuell zu betätigenden Kodierschalter 28 können die Schwellenwerte für die Komparatormodule 24, 26 auch unter Zuhilfenahme der Telemetrie bzw. per Funk vorgegeben werden.

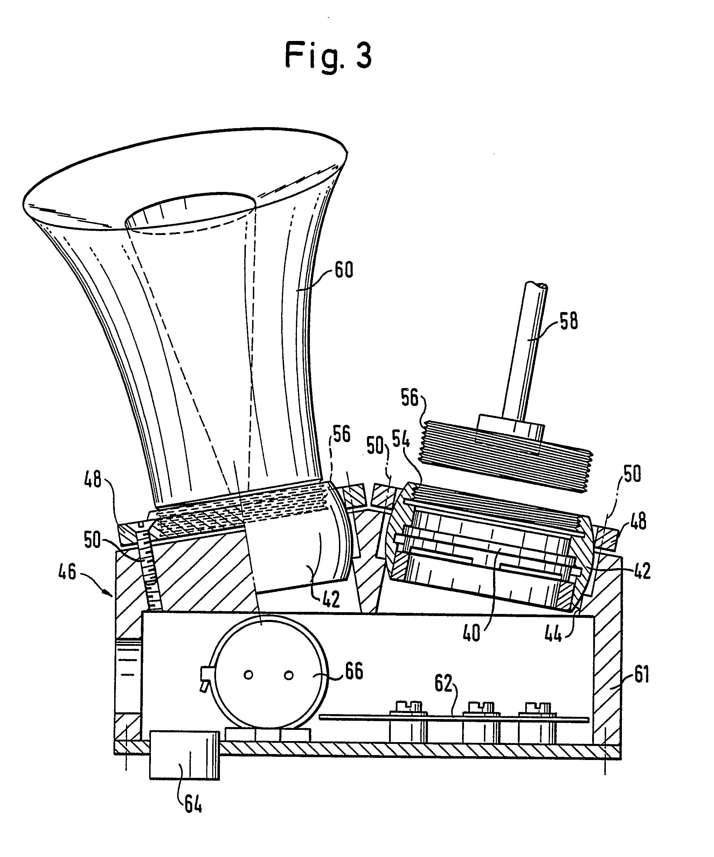

Fig. 3 zeigt eine konstruktive Ausgestaltung einer Aufnahmevorrichtung für mehrere, im gezeigten Fall für zwei Ultraschallsensoren 40. Jeder Ultraschallsensor 40 ist in einem kugeligen Schwenkkopf 42 gehalten, der seinerseits in einer Bohrung 44 eines am Fahrzeug 2 (Fig. 1) befestigten Gehäuses 46 aufgenommen und von einer Druckplatte 48 darin gehalten ist. Die Druckplatte 48 ist über Justierschrauben 50 mit dem Gehäuse 46 in gewünschter Winkellage dazu verbunden.

## Ansprüche

1. Verfahren zum Sichern eines im Raum beweglichen Fahrzeugs oder Geräts, wie eines Roboters, Staplers, fahrerlosen Transportfahrzeuges oder dgl., gegen Kollision, wobei unter Einsatz von Abstandssensoren, insbesondere Ultraschallsensoren mit Laufzeitmessung, die Entfernung von einem Hindernis gemessen und bei Unterschreiten von vorgegebenen Schwellenwerten ein Reaktionssignal zur Beeinflussung der Fahrzeugbewegung ausgelöst wird, dadurch **gekennzeichnet**, daß die Entfernungsmessungen für alle Sensoren zeitlich synchron ausgelöst und die gewonnenen Meßsignale gemeinsam zur Erzeugung mindestens eines Reaktionssignals verarbeitet werden.

2. Verfahren nach Anspruch 1, dadurch **gekennzeichnet**, daß die Meßsignale des oder jedes Abstandssensors als Führungssignale zur aktiven Beeinflussung der Fahrzeugbewegung im Sinne einer Hindernisumfahrung, Fahrt parallel zu einer Wand oder dgl. ausgenützt werden.

3. Einrichtung zum Sichern eines im Raum beweglichen Fahrzeugs oder Geräts, wie eines Roboters, Staplers, fahrerlosen Transportfahrzeuges oder dgl., gegen Kollision, wobei unter Einsatz von Abstands sensoren, insbesondere Ultraschallsensoren mit Laufzeitmessung, die Entfernung von einem Hindernis gemessen und bei Unterschreiten von vorgegebenen Schwellenwerten ein Reaktionssignal ausgelöst wird,
**gekennzeichnet** durch
- einen Zeitmodul (20), welcher die Meßvorgänge aller Abstandssensoren (40) auslöst und taktet,
- einen Komparatormodul (24,26), welcher die Entfernungsmeßwerte der einzelnen Abstandssensoren (40) mit den Schwellenwerten vergleicht und bei deren Unterschreiten das Reaktionssignal abgibt,
- einen Ausgabemodul, welcher den auslösenden Abstandssensor identifiziert und eine Schnittstelle (36) für die Umsetzung des Reaktionssignals in ein den Antrieb des Systems beeinflussendes Signal bildet.

4. Einrichtung nach Anspruch 3, dadurch **gekennzeichnet,** daß alle Abstandssssensoren (40) als gleiche Ultraschallsensoren zum Aussenden und Empfangen von Ultraschallsignalen ausgebildet sind und mit einem Sensormodul (22) zur Auslösung und zur Vorverarbeitung des Meßsignals zusammengeschaltet sind.

5. Einrichtung nach Anspruch 3 oder 4, dadurch **gekennzeichnet,** daß die Schwellenwerte individuell, gruppenweise oder gemeinsam für alle Abstandsssensoren gleich in den Komparatormodul (24,26) vorgebbar und veränderbar sind.

6. Einrichtung nach einem der Ansprüche 3 bis 5, dadurch **gekennzeichnet,** daß zwei Komparatormodule (24,26) vorgesehen sind, von denen der eine vorgegebene Schwellenwerte für ein Geschwindigkeitsreduktionssignal und der andere vorgegebene Schwellenwerte für ein Stopsignal enthält.

7. Einrichtung nach einem der Ansprüche 3 bis 6, dadurch **gekennzeichnet,** daß die Schwellenwerte in den oder jeden Komparatormodul (24,26) über einen Kodierschalter (30) oder per Funk eingegeben werden.

8. Einrichtung nach dem Oberbegriff des Anspruchs 3, dadurch **gekennzeichnet,** daß der oder jeder Ultraschallsensor (40) in einer am Fahrzeug (2) angebrachten Aufnahmevorrichtung nach allen Richtungen in vorgebbaren Winkelbereichen justierbar untergebracht ist.

9. Einrichtung nach Anspruch 8, dadurch **gekennzeichnet,** daß die Aufnahmevorrichtung zur Aufnahme mehrerer individuell justierbarer Ultraschallsensoren (40) und eines den Ultraschallsensoren gemeinsamen Sensormoduls in Gestalt einer Elektronikbaugruppe (62) ausgestaltet ist.

10. Einrichtung nach Anspruch 8 oder 9, dadurch **gekennzeichnet,** daß die Aufnahmevorrichtung ein Gehäuse (46) mit einer Bohrung (44) zur austauschbaren Unterbringung eines kugeligen Schwenkkopfes (42) aufweist, welcher den Ultraschallsensor (40) enthält und nach dem Justieren mittels Schrauben (50) in der eingestellten Lage im Gehäuse (46) fixierbar ist.

11. Einrichtung nach Anspruch 10, dadurch **gekenn zeichnet,** daß der Schwenkkopf (42) einen Justieransatz (54) aufweist, der zur formschlüssigen Verbindung, insbesondere Gewindeverbindung, mit einer Justiervorrichtung (58) ausgebildet ist.

12. Einrichtung nach Anspruch 11, dadurch **gekennzeichnet,** daß ein Richtungshorn (60) mit dem Justieransatz (54) verbindbar ist.

13. Einrichtung nach einem der Ansprüche 8 bis 12, dadurch **gekennzeichnet,** daß der Schwenkkopf (42) zur kapazitiven Entkoppelung des Ultraschallsensors (40) von dem Gehäuse (46) ausgebildet ist.

Fig. 1

Fig. 2

# Fig. 3